# EUROPEAN PATENT APPLICATION

(11) **EP 4 768 664 A1**
(43) Date of publication of application: **01.07.2026**
(21) Application number: 24223372.4
(22) Date of filing: 27.12.2024
(51) Int. Cl.: E01C 13/00

(54) **SPORT FLOOR COMPONENT COMPRISING COVALENTLY CROSS-LINKED NATURAL RUBBER**

(71) Applicant: Melos GmbH, 49324 Melle (DE)
(72) Inventor: SALLAT, Aladdin, 49326 Melle (DE); TEBBEN, Maike, 31675 Bückeburg (DE); SICK, Stephan, 76534 Baden-Baden (DE); GROCHLA, Dario, 44869 Bochum (DE)
(74) Representative: Richardt Patentanwälte PartG mbB

(57) **Abstract**

Disclosed is a sports floor component (200, 404, 600l) comprising covalently cross-linked rubber (902), and further comprising a filler (700, 904), wherein the rubber is natural rubber or epoxidized natural rubber.

## Description

### FIELD OF THE INVENTION

The invention relates to the field sport floors and components thereof.

### BACKGROUND

The use of synthetic materials in sports flooring systems, including artificial grass infill, running tracks, and shock pads, has become widespread due to their performance characteristics, durability, and ability to meet the demands of modern sports and recreational activities. However, these materials are predominantly manufactured from non-renewable, petrochemical-based resources such as polyurethane, polyethylene, EPDM (ethylene propylene diene monomer rubber), and styrene-butadiene rubber (SBR). The reliance on such petro-based materials poses significant environmental and sustainability challenges.

A key challenge with these components is their lifecycle reliance on finite fossil resources.

During their operational life, sports floor components such as artificial grass infill and running tracks are exposed to mechanical wear, weathering, and ultraviolet (UV) degradation. These processes result in material fragmentation, leading to the release of particles into the environment and contributing to a shortened lifespan of the components. Moreover, mechanical wear, weathering, and ultraviolet (UV) degradation changes the chemical composition of sports floor components and, accordingly, of their mechanical performance. In many cases, clumping of the materials is observed. Despite the above-mentioned drawbacks, petrochemical-based polymers have been widely used in sports flooring applications due to their robustness and ability to withstand harsh environmental conditions and mechanical stressors.

Alternatives such as recycled materials have been explored, but these often lack the necessary chemical or mechanical properties to meet the demanding requirements of sports flooring. In particular, some of these materials exhibit a reduced lifespan, making them less viable for long-term use in high-performance applications.

### SUMMARY OF THE INVENTION

It is an objective to provide an improved sports floor component and method for manufacturing the same. The objectives underlying the invention are solved by the features of the independent claims.

In one aspect disclosed herein is a sports floor component comprising covalently cross-linked rubber, and further comprising a filler. The rubber can be natural rubber (NR) or epoxidized natural rubber (ENR).

According to embodiments, the covalent cross-links are irreversible. The covalently cross-linked natural rubber is irreversibly cross-linked natural rubber.

In a further aspect, disclosed herein is a method of manufacturing a sports floor component. The method comprises: mixing rubber and a filler to provide a rubber composition, wherein the rubber is NR or ENR; covalently cross-linking the rubber in the rubber composition to form a matrix of covalent bonds incorporating the filler.

It is understood that one or more of the examples described herein may be combined as long as the combined examples are not mutually exclusive.

### BRIEF DESCRIPTION OF THE DRAWINGS

In the following, examples are described in greater detail making reference to the drawings in which:
Fig. 1 is a flow chart of a method of manufacturing a sports floor component;
Fig. 2 illustrates a sports floor component in the form of infill;
Fig. 3 illustrates artificial turf comprising the infill;
Fig. 4 illustrates a sports floor component configured as a support layer within a sports floor system;
Fig. 5 illustrates a sports floor in the form of a running track;
Fig. 6 illustrates a sports floor in the form of a shock pad;
Fig. 7 illustrates the structure of lignin from a softwood;
Fig. 8 illustrates the epoxidation reaction of natural rubber;
Fig. 9 illustrates a matrix of covalently cross-linked rubber molecules;
Fig. 10 illustrates a matrix of covalently cross-linked rubber molecules also cross-linked with filler molecules; and
Fig. 11 illustrates a high temperature dynamic heat treatment (HTDHT) procedure applied on an ENR-lignin mixture.

### DETAILED DESCRIPTION

Using a sports floor component comprising covalently cross-linked NR or ENR and a filler offers significant technical and environmental benefits:

The above-mentioned sports floor component is environmentally friendly, because it is made of renewable and sustainable materials: natural rubber is sourced from renewable plant-based latex, reducing dependence on non-renewable petrochemicals. In case a renewable filler like lignin is used, also the filler is made of a renewable, plant-based material. Often, lignin is provided as a byproduct of the paper and biofuel industries, offering a sustainable way to upcycle industrial waste. The lignin used as filler can also be produced from wood directly as a wood-based filler. Hence, the production of natural rubber (optionally also comprising a renewable filler like lignin) generates fewer greenhouse gas emissions compared to synthetic, petrochemical-based rubbers. In many cases, the use of lignin-based filler may even result in a negative CO2 footprint. Furthermore, components made from natural rubber are more likely to degrade over time in natural environments than many petro-based alternatives, reducing long-term plastic pollution.

The covalent cross-linking of NR (or ENR) enhances its elasticity, durability, and resistance to wear, making it highly suitable for high-performance sports applications.

Furthermore, natural rubber has a higher tensile strength ("green strength") and mechanical stability than many petro-based rubbers such as EPDM (NR shows additionally a so called "strain induced crystallization").

Hence, the use of covalently cross-linked NR (or ENR) may overcome the disadvantage of natural rubber compared to petro-based rubber: some petro-based rubber types such as EPDM have a saturated backbone structure and are engineered with only few reactive sites and hence show a higher UV resistance, radical resistance and oxidation resistance than natural rubber. The backbone of natural rubber is made of Cis-1,4-polyisoprene comprising many unsaturated and highly reactive bonds which are prone to light-induced decay and oxidation. By covalently cross-linking the NR (or ENR), these disadvantages of natural rubber can be significantly reduced. Hence, a bio-based, renewable alternative to petro-based sport flooring components is provided which shows a similar or superior resistance against UV light, ozone, radicals and oxidative stress as petro-based components.

According to embodiments, the covalent cross-links are irreversible. The covalently cross-linked NR (or ENR) is irreversibly cross-linked NR (or ENR).

For example, "irreversible" cross-links refer to covalent bonds that form permanent connections between polymer chains and are created through chemical reactions that cannot be reversed to restore the polymer chains to their original structure and composition. According to some embodiments, the creation of the irreversible bonds between NR chains involves the introduction of sulfur or peroxides. The structure resulting from irreversibly chemically cross-linking the NR chains may be characterized as a thermoset material that cannot be reprocessed or remelted, contrasting with thermoplastics. In the case of sulfur cross-linking, the irreversible bonds between the NR chains may be mono- di- and/or poly-sulfidic bonds. These bonds are weaker than the polymeric C-C bonds. This means that the destruction of the cross-links network is not necessarily connected to the degradation of the rubber backbone itself or of the filler structure. However, the NR polymer chains obtained by a destruction of these sulfidic bonds would not represent the NR polymer chains in their original structure and composition.

In contrast, "reversible" cross-links are chemical connections that can break and reform under certain conditions, and may hence facilitate properties like self-healing, reprocessability, and tunable mechanical responses. When a reversible cross-link breaks, the educts having been used for creating the cross-link are regenerated, therefore the cross-link is "reversible". A "reversible cross-link" may also be referred to as "dynamic cross-link" or "dynamic bond". In particular, the formation or breaking of a reversible cross-link may be triggered by a change in one or more environmental parameter values such as temperature or stress. Reversible cross-links can be, for example, non-covalent bonds, like, for example, ionic bonds or hydrogen bonds, and in some cases also covalent bonds formed in specific reactions like Diels-Alder or disulfide exchange reactions. Although hydrogen bonds are often referred to as "interactions" in the literature, they are also classified here as "reversible cross-links.". The covalent bonds formed in these special reactions remain stable for a predefined duration under typical environmental conditions at the use or installation site of the sports floor component. This predefined duration typically corresponds to the typical lifespan of the sports floor component. For instance, the lifespan may be at least 2 years or at least 5 years from the installation date. In some cases, the lifespan may range from 2 to 40 years, commonly between 5 to 20 years, or approximately 10 to 15 years. As an example, reversible covalent cross-links in artificial turf infill or other sports floor components may remain stable for at least 5 years under temperatures ranging from -20°C to +60°C. However, in some cases, the predefined duration may be shorter than the typical lifespan of the sports floor component, e.g. in cases where a predefined rate of decay is desired to allow for a continuous replacement of only parts of the sports floor component. Unlike "irreversible" covalent bonds, "reversible" bonds can be broken under stress conditions that leave the NR (or ENR) matrix and the filler largely intact. Such stress conditions may include extended use beyond the predefined duration or exposure to elevated temperatures or other environmental parameters exceeding those typically encountered during the normal use of the sports floor. These conditions may degrade the reversible cross-links without immediately destroying the NR (or ENR) backbone or the filler. Nevertheless, the complete or partial destruction of the reversible cross-links of the NR (or ENR) may compromise the overall structural integrity of the sports floor, making it more susceptible to accelerated decay and degradation.

According to embodiments, the covalently cross-linked NR (or ENR) forms an elastomeric matrix filled with the filler.

According to some embodiments, the filler is or comprises an inorganic filler, in particular an inorganic filler selected from a group comprising: Chalk; Silica (SiO2, Quartz Sand); Calcium Silicate; Barium Sulfate; Clay or Kaolin; Aluminum Hydroxide; Magnesium Hydroxide; Zinc Oxide; Fly Ash; Talc; Wollastonite; Perlite. These embodiments may have the advantage that many of these fillers are cheap and/or have a white or bright color, which allows using these fillers also for sports floor components which are visible and which shall have a white or bright color.

According to some embodiments, the filler is or comprises silica or lignin or a mixture of silica and lignin. Silica and lignin may have the advantage that they allow creating covalent cross-links between the double bonds of the NR (or ENR) and hydroxyl groups of the filler surface.

For example, this may be achieved via silanes acting as silane coupling agents such as vinyl silanes, mercapto silanes or amino silanes which respectively comprise an organofunctional group R. For example, the silane coupling agents may have the formula R-Si-(O-R)3.

The cross-links between the filler and the NR (or ENR) may be irreversible covalent cross-links. In some examples, the filler is silanized silica or silanized lignin, wherein preferably the silanization is performed under the presence of the NR or ENR such that covalent cross-links between the filler and the NR or ENR molecules are formed.

According to some examples, the method for covalently coupling the filler (lignin and/or silica) with the rubber backbone is performed as described below. In case the filler comprises a mixture of lignin and silica, this method may be applied to only one of or both filler components. The method may comprise the following steps:

In a first step, the filler (lignin and/or silica) is mixed with the rubber (NR or ENR). This can be performed using equipment such as an internal mixer with a rotor and heating system or the mixing unit of an extruder. Once the filler and rubber are thoroughly combined, the temperature of the mixture is gradually increased to 50-120°C while maintaining continuous mixing.

Next, silane coupling agents are added to the mixture, and mixing is continued at elevated temperatures, typically ranging from 80°C to 180°C, depending on the specific type of silane coupling agent used. During this stage, the silanization process occurs, involving the following chemical reactions that proceed simultaneously within the silanization reaction mixture:

Silane hydrolysis: The silane coupling agents are brought in contact with water or with moisture to induce hydrolysis of the silane comprised in the silane coupling agents. Typically, the atmospheric humidity or the moisture comprised in the filler is sufficient. Thereby a silanole (a molecule having a Si-OH group) is created. For example, the hydrolysis may involve the following reaction: R-Si-(O-R)3 + 3 H2O → R-Si-(OH)3 + 3RHO.

Condensation with the filler: In this step, the silanoles obtained in step 1 react with the hydroxyl groups on the filler surface. Stable siloxane bonds are formed. The siloxane bonds anchoring the silane to the filler.

Coupling step (Attachment to the rubber): In this step, the organofunctional group of the silane coupled to the filler may react with double bonds or other reactive sites of the ENR, thereby forming a covalent cross-links between the filler and the ENR molecules.

At this step, preferably no curing agent is present.

After completion of the silanization, the mixture is cured. According to preferred embodiments, after the silanization has completed, the rubber-silanized-filler mixture is transferred to an autoclave, mixed with a curing agent, e.g., a vulcanization agent such as sulphur, and cured.

Executing the coupling reaction of the silanization before the actual curing is performed may increase the effectiveness in the subsequent curing phase. However, in some examples, the coupling reaction is executed in the presence of curatives.

Different types of silane coupling agents may form different types of covalent bonds with the rubber. For example, a vinyl silane can undergo free-radical addition to the ENR's double bonds. A mercapto silane can form bonds via thiol-ene addition, when the mercapto (-SH) group reacts with the rubber double bonds. The reaction conditions will depend on the type of silane coupling agent used. For example, for vinyl silanes, initiators like dicumylperoxide (DCP) or benzoylperoxide are used at 140°C to 180°C. For mercapto silanes, no initiator is required, but the mixture is heated to about 80-120°C. After completion of the silanization, the mixture is cured.

This may ensure that the filler is immobilized through the establishment of covalent bonds between the filler and the rubber matrix. As a result, higher amounts of filler can be incorporated without the risk of it detaching from the material under heavy wear. This, in turn, enhances the mechanical stability and extends the lifespan of the sports floor component. If significant amounts of filler were to detach from the matrix, the rubber matrix could become mechanically unstable, leading to the formation of cracks. Such cracks could allow water to infiltrate the rubber matrix, accelerating material degradation through processes such as freeze-thaw cycles or by creating a moist environment supportive of microorganism growth.

According to other embodiments, the filler is or comprises a recycled, plastic-based filler. This may have the advantage of further reducing the carbon-footprint of the material by re-using existing and already used plastic material.

According to other embodiments, the filler is or comprises an organic filler, in particular Carbon Black or a renewable organic filler, in particular lignin.

The inventors have observed that lignin may increase thermal, oxidative and mechanical stability and the UV resistance of the cross-linked NR (or ENR), and hence of the sports floor component. Lignin has natural UV-absorbing properties, which protect the natural-rubber matrix from UV-induced degradation. Lignin increases the thermal resistance of natural rubber, making it suitable for applications exposed to elevated temperatures. It acts as a thermal stabilizer, reducing degradation during processing and prolonged use.

Additionally, lignin serves as a reinforcing filler and has been shown to improve stiffness, tensile strength, and thermal stability.

The inventors have observed that lignin possesses natural antioxidant and UV-blocking properties. These characteristics are particularly advantageous in this context, as the incorporation of lignin compensates for the inherent susceptibility of natural rubber to degradation caused by sunlight, oxidative stress (e.g., ozone, free radicals), and other environmental factors, thereby significantly extending the material's lifespan.

The combination of lignin and cross-linked NR (or ENR) provides synergistic advantages with respect to robustness against abrasion and fragmentation, because lignin acts as a reinforcing filler and minimizes the generation of plastic particles during exposure to wear and tear, the sun and oxidative stressors. Hence, a high-performance alternative to conventional petro-based rubber systems in sports flooring applications may be provided.

According to embodiments, the filler may be a combination of two or more of the aforementioned types of fillers.

For example, in some embodiments, the filler may basically consist of inorganic filler material and a small amount of lignin. For example, the weight ratio of lignin:rubber in the sports floor component may be in the range of 1:100 to 10:100, in particular in the range of 5:100 to 10:100.

According to some embodiments, the matrix comprises covalent bonds between the cross-linked NR (or ENR) and the filler. For example, the filler may be an organic filler like lignin comprising reactive groups such that during the creation of the irreversible covalent bonds between the NR (or ENR) molecules, also covalent bonds between the NR (or ENR) and the lignin molecules are formed. This may be beneficial as the stability and robustness of the NR (or ENR) matrix with respect to UV and oxidation-induced degradation is increased.

Lignin is polar, while natural rubber is apolar, resulting in suboptimal interfacial compatibility between these two molecule types. However, the inventors have observed that interfacial compatibility can be improved by using epoxidized natural rubber (ENR). The presence of polar epoxy groups (and any optionally grafted polar functional groups) in ENR makes it more polar than NR, enhancing compatibility with lignin. According to embodiments, the sports floor component is at least one of: an artificial turf infill; a component of a running track; a component of a tennis court; a support mat; a shock pad; and a combination of two or more of the aforementioned components. For example, the sports floor component could be a cushioning layer of a tennis court or running track, or a support mat installed below a tennis court or running track.

The sports floor component may be designed for either indoor or outdoor applications. The combination of cross-linked NR (or ENR) with lignin is particularly advantageous for outdoor use, as it offers enhanced robustness against elevated UV exposure, temperature fluctuations, and oxidation-induced stress. This improved durability makes it especially suitable for environments subject to harsh weather conditions and prolonged sunlight exposure.

The use of lignin as a filler is particularly advantageous when the artificial sports floor component is artificial grass infill, and a natural look and feel for the grass is desired. Lignin's dark brown color closely resembles soil, allowing the infill to replicate a natural appearance. However, for colored sports surfaces or sports floor components that remain visible, a lighter filler, such as chalk, is preferably used to achieve the desired aesthetic.

According to embodiments, the lignin is selected from a group consisting of Kraft lignin, Magnesium Lignin and Sodium Lignin. Preferably, the lignin is Kraft lignin.

Lignins are complex, three-dimensional polymers produced by vascular plants and play a key role in providing structural integrity to plant fibers.

Kraft Lignin is a type of lignin that is derived from wood pulp processes, specifically the kraft process. It is a significant industrial lignin type available in large quantities. Kraft lignin typically exhibits a glass transition temperature (Tg) around 153°C and has a relatively low molecular weight (typically below 4000 Da, e.g., 2300 Da).

Magnesium Lignin (Mg-Lignin) is the magnesium salt of lignosulfonic acid, which is more basic in nature. It has a higher molecular weight (e.g., 6200 Da) and a lower Tg (-26°C) compared to kraft lignin.

Sodium Lignin (Na-Lignin) is a sodium salt of lignosulfonic acid. Its molecular weight is also higher (e.g., 7000 Da), and it shows a Tg of about -27°C, indicating a more flexible structure at lower temperatures.

These lignins can have varying effects and functionalities when used as fillers or additives in different polymer matrices, such as rubber, primarily due to their distinct chemical structures and physical properties. The inventors have observed that kraft lignin shows superior reinforcing capabilities compared to the other two types. Without the wish to be bound by any theory, Kraft lignin is assumed to show the best performance due to its basic nature, enhancing the sulfur cross-linking reaction compared to the acidic Mg- and Na-lignin.. Due to its complex structure and high molecular weight, achieving uniform dispersion of lignin in the NR (or ENR) matrix can be difficult. Improved dispersion can help ensure consistent and uniform mechanical properties throughout all parts of the sports floor component..

Furthermore, the kraft pulping process introduces a higher concentration of phenolic hydroxyl groups in lignin compared to other lignin extraction methods. These groups form hydrogen bonds with the NR (or ENR) matrix, improving the interfacial adhesion and stress transfer between lignin and the rubber.

According to some embodiments, the sports floor component comprising the lignin does not need any additional UV-protectant additives and/or anti-ozone agent additives, and hence may be free of a UV-protectant additive and/or may be free of an anti-ozone agent additive. Lignin enhances the stability of rubber under thermal oxidative aging, attributed to its phenolic structure that can act as an antioxidant.

According to embodiments, the filler is lignin and the mixing of the rubber and lignin to provide the rubber composition comprises: mixing the rubber and the lignin comprising lignin-agglomerates, to form an initial mixture; and subjecting the initial mixture for at least 5 minutes to a temperature of 150°C to 200°C to provide a further mixture with increased dispersion of the lignin in the rubber. This process may be referred to as high temperature dynamic heat treatment. The further mixture is then used as the rubber composition to be mixed with the further additives, the vulcanization agent and/or the accelerator of vulcanization.

According to embodiments, the rubber is epoxidized natural rubber (ENR).

ENR is one of the modified rubbers derived from natural rubber. The modification process is done by introducing oxygen atom to the unsaturated molecule of natural rubber. This chemical reaction produces an oxirane or epoxide compound that consists of a three-membered ether in a cyclic form. Various grades of ENR can be used depending on the extent of modification desired. For example, ENR 25 (25 mole% epoxide) and ENR 50 (50 mole% epoxide) are available on the market.

ENR is NR that has been chemically modified to include epoxide groups, enhancing its resistance to thermal and oxidative degradation. While ENR offers improved properties compared to untreated natural rubber, it still experiences some aging and degradation over time, primarily driven by similar mechanisms as those affecting conventional natural rubber (ENR, like NR, comprises unsaturated bonds).

The use of ENR in combination with lignin has been observed to be particularly beneficial, because the epoxide groups in ENR make the NR more polar, thereby facilitating interaction and adhesive forces between the rubber matrix and the polar filler lignin.

In order to prevent or reduce the aging induced by heat, UV radiation, ozone, oxidants and high temperatures, various additives may be added to the ENR-filler composition (also referred to as ENR-filler mixture) that have been mentioned here already as optional additives for the rubber - filler composition (e.g., antioxidants, UV-protection agents, anti-ozone agents, etc. The irreversible formation of cross-links between epoxidized natural rubber molecules may also help prevent degradation. Typically, however, the amount of protective additives may be lower for ENR than for natural rubber, as the epoxidation already provides a good degree of protection against premature degradation.

According to some embodiments, the covalently cross-linked rubber is vulcanized rubber.

According to some embodiments, the covalently cross-linked rubber is urethane-cross-linked rubber. For example, urethane-cross-linked NR (or ENR) may be created by adding urethane cross-linking agents to the composition comprising the NR (or ENR) and the filler. Urethane cross-linking agents are chemical compounds that form covalent bonds between polymer chains through urethane linkages (-NH-CO-O-). Thereby, the mechanical strength, chemical resistance, and thermal stability is increased by creating a three-dimensional polymer network cross-linked via irreversible covalent bonds between different NR (or ENR) molecules. The effects are analogous to the effects provided by sulfur-based vulcanization.

The urethane cross-linking agent is preferably an isocyanate containing reactive -NCO groups. The -NCO reactive groups react with hydroxyl-terminated polymers. The resulting urethane linkages create a network structure that enhances the mechanical properties of rubber. Cross-links can be formed through the reaction between isocyanates and active hydrogen atoms in the rubber or through the formation of urea linkages from reaction with amino compounds. In natural rubber specifically, urethane cross-linking can occur via prepolymers that are incorporated into the rubber matrix during compounding.

The isocyanate can be, for example, a diisocyanate (e.g., toluene diisocyanate (TDI), or methylene diphenyl diisocyanate (MDI)), or a polyisocyanate (e.g., hexamethylene diisocyanate (HDI) trimer). According to other embodiments, urethane prepolymers are used as the urethane cross-linking agent.

Urethane cross-linking of NR (or ENR) may have several notable advantages: Urethane cross-linked NR was observed to exhibit remarkable stability against aging and improved tensile strength and abrasion resistance. It does not revert easily under heat, enhancing its lifespan and performance in demanding applications.

For example, the urethane cross-linking of NR (or ENR) can be achieved by creating a composition, also referred to as reaction mixture, that comprises the NR (or ENR), an urethane cross-linking agent capable of cross-linking diene-containing NR (or ENR), and at least one maleimide cross-linking agent. The maleimide cross-linking agent is preferably added to the composition such that the weight ratio of maleimide cross-linking agent to said urethane cross-linking agent is from about 4:1 to about 1:10. The urethane cross-linking agent may be a polyisocyanate or a derivative thereof.

The urethane cross-linking agent according to one embodiment is represented by the formula: R-(-NH-CO-O-N Q O)m in which R can be a hydrocarbon groups having a functionality of at least two, or can be a polyetherglycol group. Q is an aromatic group in the quinonoid configuration, and m is an integer above 1.

For example, the urethane cross-linking agent can be toluene diisocyanate (TDI), methylenebis(phenyl isocyanate) (MDI), hexamethylene diisocyanate (HDI) or isophorone diisocyanate (IPDI).

The maleimide cross-linking agent can be, for example, N,N"-linked bismaleimides joined directly at the nitrogen atoms and N,N"-linked bismaleimides in which the nitrogen atoms are joined to and separated by an intervening divalent radical selected from the group consisting of alkylene, cycloalkylene, oxydimethylene, phenylene, 2,6-dimethylene-4-alkylphenol and sulfonyl chloride.

The maleimide cross-linking agent can be, for example, N,N'-m-phenylene bismaleimide (BMI), N,N'-ethylene bismaleimide, N,N'-hexamethylene bismaleimide, or N,N'-isophorone bismaleimide. Maleimide cross-linking agents may be particularly effective in improving the thermal and oxidative stability of vulcanized rubber.

According to one example, the urethane cross-linking agent is the phenol-blocked monourethane of 2,4-toluene diisocyanate and p-nitroso-m-cresol, and the maleimide cross-linking agent is m-phenylene bismaleimide.

In order to perform the urethane cross-linking, rubber is mixed with a curing composition which comprises at least one urethane cross-linking agent capable of cross-linking diene-containing rubber and optionally also at least one maleimide cross-linking agent capable of cross-linking diene-containing rubber. The curing composition comprising the two cross-linking agents is incorporated in the rubber at a concentration of from about 0.1 to about 26 phr, in particular 3 to 8 phr, based on the weight of the dry rubber. The composition is heated to cross-linking temperatures.

According to one embodiments, the rubber-filler composition is created such that it comprises 100 parts by weight of dry diene-containing NR (or ENR), about 1 to 20 parts by weight, e.g., 10 parts per weight, of at least one urethane cross-linking agent capable of cross-linking diene-containing rubber, and about 0.1 to about 6, in particular 3 parts by weight of a maleimide cross-linking agent capable of cross-linking diene-containing rubber.

Once a homogeneous dispersion of the urethane cross-linker in the rubber is reached (at a temperature of about 90°C to about 125°C, a sulfur accelerator may be added to the composition which is a catalyst for the urethane cross-linker. Thereafter, curing at temperatures in a range of about 140°-180°C for about 10-30 minutes is performed.

According to some embodiments, the vulcanization, e.g., a vulcanization using sulfur as vulcanizing agent, is executed under the presence of an urethane cross-linking agent in the composition. This may provide for a particularly strongly covalently and irreversible cross-linking of the NR (or ENR) molecules.

The inventors have observed that introducing urethane-based cross-linking agents can increase fatigue resistance and improve aging performance compared to conventional sulfur systems. This method allows for higher processing temperatures with retained physical properties.

According to some embodiments, the covalently cross-linked NR (or ENR) is a covalently cross-linked blend of NR (or ENR) and a saturated elastomer, wherein the saturated elastomer is in particular EPDM. The use of EPDM as a saturated rubber in the blend may help to increase the weathering resistance of the manufactured sports floor component. The inventors have observed that the irreversible cross-linking of the rubber helps to firmly fix the EPDM particles in the rubber matrix.

According to some embodiments, the sports floor component is coated with a waxy barrier layer. For example, the waxy barrier layer can be made of paraffin waxes, in particular fully refined paraffin waxes with a melting point in the range of 50°C to 65°C. Paraffin Waxes are saturated hydrocarbon waxes which have good film-forming properties, and are well suited for providing a protective barrier against ozone and UV.

In other embodiments, natural waxes such as carnauba wax or beeswax are used. These biobased, natural waxes provide eco-friendly alternatives to synthetic options while offering excellent protective properties.

In some examples, the waxy barrier layer is created by applying the wax to the sports floor component as a final manufacturing step. For instance, the wax can be sprayed, painted, or otherwise applied to the surface of the component. Alternatively, the wax may be incorporated into the rubber- filler composition prior to the introduction of covalent cross-links. In this approach, wax molecules migrate to the surface during use of the sports floor component, forming a waxy protective layer automatically. This method offers the added advantage of a self-renewing protective layer, as new wax molecules migrate to the surface to replace those that are abraded over time, ensuring continuous protection of the sports floor component.

According to embodiments, the sports floor component further comprises one or more additives comprising at least one of: a plasticizer, in particular bio-based oil; a UV-protectant; a thermal stabilizer; an antioxidant; and an anti-ozone agent; and a combination of two or more of these additives. These additives may further increase the robustness of the rubber matrix against decay and a loss of elasticity and structural integrity induced by UV radiation, free radicals, ozone, oxidizing agents and high temperature, thereby increasing the lifespan of the sports floor.

The antioxidant can be, for example, an amine antioxidant, in particular para-phenylenediamine. In addition, or alternatively, the antioxidant is a phenolic antioxidant.

According to embodiments, the covalently cross-linked rubber is the result of vulcanizing the rubber. The sports floor component further comprises a vulcanizing agent. The vulcanizing agent can be, for example, sulfur, peroxides or metal oxides. Preferably, the vulcanizing agent is sulfur.

According to embodiments, the sports floor component further comprises an accelerator configured to speed up the formation of the covalent cross-links. The covalent bonds may be formed, for example, in a vulcanization reaction. The accelerator can be, for example, a thiazole, a sulfenamide, a thiuram or a dithiocarbamate.

Described herein is also a method of manufacturing a sports floor component. The method comprises: mixing rubber (NR or ENR) and the filler to provide a rubber composition; covalently cross-linking the rubber in the rubber composition to form a matrix of covalent bonds incorporating the filler.

According to embodiments, the method comprises adding one or more additives to the natural rubber composition prior to the creation of the covalent cross-links. The additives may be, for example, one or more of UV-protectants, antioxidants, and anti-ozone agents; and/or a vulcanization agent. The vulcanization agent may be added to facilitate the formation of cross-links between polyisoprene chains in the rubber. For example, sulfur may be added in an amount between 0.5% to 3% by weight of the rubber composition.

In addition, the method may comprise adding an accelerator of a vulcanization reaction. The vulcanization accelerator can be, for example, a thiazole, a sulfenamide, a thiuram, or a dithiocarbamate.

According to embodiments, the covalently cross-linking is a vulcanization. The vulcanization includes heating the rubber to a temperature range of about 140°C to 200°C, and in particular, for most applications, 140°C to 160°C, to initiate cross-linking reactions. For optimized performance, some rubber-filler compositions may allow for temperatures of up to 200°C. For example, efficient vulcanization systems are vulcanization reaction mixtures that can be vulcanized at higher temperatures (180-200°C). High vulcanization temperatures improve heat-aging resistance and lower compression set. Efficient vulcanization systems utilize higher amounts of accelerators than sulfur. According to some examples, less than 1 part sulfur is mixed with 2.5-3 parts accelerator.

In the following, similar elements are denoted by the same reference numerals.

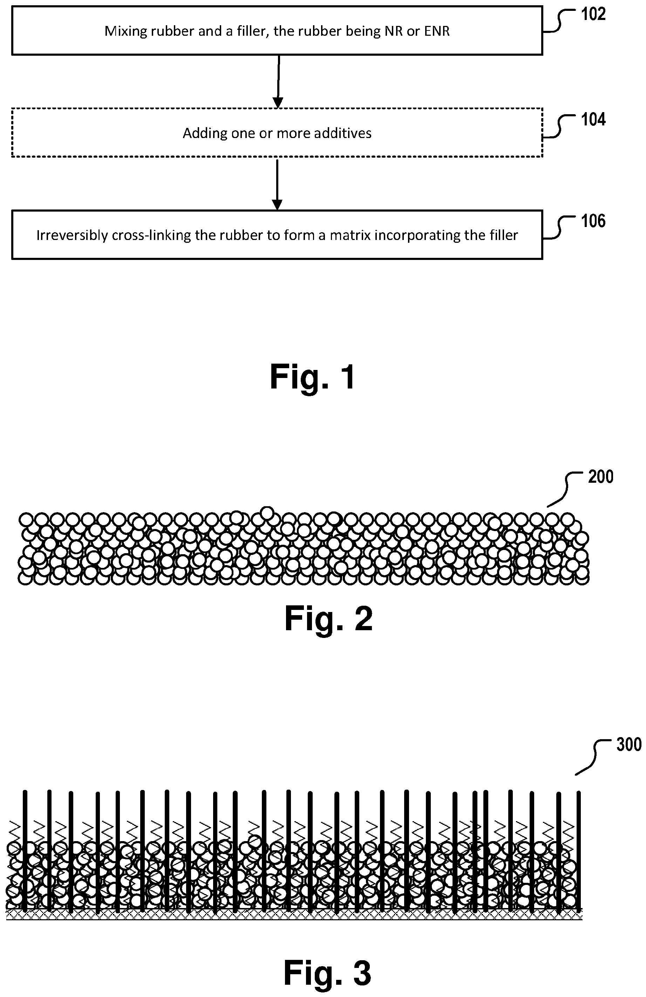

Figure 1 is a flow chart of a method of manufacturing a sports floor component made of irreversibly covalently cross-linked NR (or ENR) comprising the filler. The filler can be lignin, and the lignin can be, for example, kraft lignin which is a byproduct of the kraft pulping process. It is a complex, aromatic polymer derived from wood, primarily used in papermaking, and is typically sold as a dry powder, granules, or in liquid form (aqueous solutions).

The rubber may be provided as raw natural rubber. Raw natural rubber is commercially available e.g. in sheet or latex form. If it is received in the liquid latex form, the natural rubber is dried to achieve a consistent starting material. Alternatively, the rubber may be ENR, or a preprocessed and/or functionalized natural rubber.

Optionally, the filler is combined with a plasticizer, e.g., a mineral oil or, preferably, a plant-based oil, and is then milled. This step may be particularly advantageous when the filler is lignin. The milling of the lignin with the plasticizer may be beneficial because it may ease the dispersion of the lignin in the rubber matrix.

Next, in step 102 the filler is mixed with the rubber to form a composition that is also referred to as "rubber composite", "reaction mixture" or "mixture". Next in step 104, a vulcanizing agent and one or more optional additives are added to the composition. The steps 102 and 104 may also be executed simultaneously, meaning that all components of the composition may be added simultaneously. The additives may comprise, for example, UV-protection agents, antioxidants, pigments, anti-ozone agents, or combinations thereof. For example, in step 104, the vulcanization agent sulfur, accelerators (e.g., thiazoles or sulfenamides), and/or activators (e.g., zinc oxide and stearic acid) may be added to the composition.

For example, the composition finally used as reaction mixture to introduce the irreversible covalent bonds between rubber polymer chains may comprise 20-50 % by weight NR (or ENR), 50-70% filler (e.g. lignin) by weight. The rest of the composition may consist of additives like vulcanizing agents, plasticizers, pigments, UV-protecting agents, anti-ozone agents, etc. Hence, the sports floor component according to embodiments of the invention which is made of the cross-linked rubber and the filler will comprise 20-50 % by weight the cross-linked NR (or cross-linked ENR), and 50-70% filler (e.g. lignin) by weight.

According to some embodiments, the vulcanization agent, e.g., sulfur, is preferably added to the composition in amounts ranging from 0.4 to 3.5 (weight) parts per hundred rubber (phr), wherein the "rubber" refers to the amount of NR or ENR in the composition. The exact amount used depends on the desired properties of the final product and the specific vulcanization method.

In some embodiments, the sulfur is added in amounts ranging from 0.4 to < 2.0 phr , in particular 0.4 to 0.8 phr. The reduced amount of vulcanization agent was observed to be associated with improved heat aging resistance.

According to some embodiments, the rubber-filler composition is a vulcanization reaction mixture comprising sulfur as the vulcanization agent. The mixture has a sulfur content of between 0.4 to 0.8 phr. According to some embodiments, the accelerator and the vulcanization agent are added in a weight ratio of the accelerator: vulcanization agent of less than 12.0:1.0. in particular 2.5:1.0 to 12.0:1.0. The reduced amount of sulfur, and in particular the above-specified accelerator:vulcanization agent ratio, can help improve thermal aging resistance and reduce stress relaxation.

The mixture is thoroughly mixed until all components are homogeneously dispersed. For example, a two-roll mill or internal mixer (e.g., Banbury mixer) can be used to mix the components. Preferably, the filler is added gradually and in powder form into the rubber to ensure uniform dispersion to avoid clumping and ensure effective reinforcement.

The curing agents, accelerators, stabilizers, and other additives may be incorporated into the composition while maintaining continuous mixing to ensure uniform dispersion and achieve a homogeneous composition.

In a further, optional step, the composition may be brought into a desired shape before the composition vulcanizes. For example, the composition can be passed through a two-roll mill or an extruder to form sheets of desired thickness. For specific applications (e.g., some types of shock pads), the composition may be molded into shapes using compression or injection molding.

Next in step 106, the composition is vulcanized. Thereby, irreversible covalent cross-links are formed between the NR (or ENR) molecules, and the filler is trapped within the elastomeric matrix of cross-linked NR (or ENR) molecules. In particular, when sulfur is used as vulcanizing agent, the sulfur atoms (S-S) form covalent cross-links between the double bonds of adjacent polyisoprene chains of the rubber.

For example, the composition can be placed into a plate vulcanizer and compressed. The composition could also be put through an extruder that vulcanizes the composition as it is extruded. In some embodiments, the vulcanization comprises placing sheets of the composition or the molded form of the composition into a vulcanization press. The press is pre-heated to the required curing temperature (e.g., 140°C-160°C). The composition is cured by applying heat and pressure to the material for a curing time of 10-30 minutes depending on thickness and formulation.

According to preferred embodiments, the vulcanization process is an autoclave vulcanization process, i.e., a vulcanization reaction executed in an autoclave. In the autoclave, a composition comprising at least NR (or ENR, the filler, the vulcanization agent, and one or more optional additives such as vulcanization accelerators, pigments, UV protection agents etc. is exposed to saturated steam under pressure. These conditions induce the formation of the cross-linkes and the NR (or ENR) is "vulcanized" or "cured". The saturated steam acts as an inert gas, facilitating better heat transfer and allowing for higher curing temperatures and shorter cure times compared to traditional methods.

The inventors have observed that autoclave vulcanization is particularly advantageous for vulcanizing NR (or ENR) for sports floor components, because the shorter cure times allows for lower temperatures and allows to reduce the overall heat exposure time to minimize any potential damage to the NR and ENR. As mentioned above, NR is more sensitive to heat and other stressors than petro-based rubber like EPDM. The pressure for curing NR (or ENR) in an autoclave can be, for example, around 0.3 to 0.7 MPa (approximately 43.5 to 101.5 psi). The curing temperature in the autoclave ranges from 140°C to 200°C, in particular 140°C to 160°C, with cure times varying based on the thickness and type of the rubber composition. For sections thicker than 10 mm, preferably a time cycle of 15 to 90 minutes is used. The increased pressure in the autoclave may allow to reduce porosity in the final product, which increases the robustness of the product against decay. Furthermore, the closed environment of an autoclave allows for a better control and mitigation of oxidation processes, which may occur when peroxide is used as a curing agent. According to some examples, the autoclave is filled and operated using an inert gas such as nitrogen, thereby increasing and preserving the quality of the product.

During vulcanization, sulfur and accelerators form covalent cross-links within the rubber matrix, integrating the filler into the network. After the vulcanization, the vulcanized rubber is removed from the press and is allowed to cool to room temperature.

The vulcanized rubber-filler composition is a solid and typically elastic material that is much more robust against UV, oxidative stress or ozone than the raw/non-vulcanized natural rubber NR (or ENR).

If lignin is used as filler, the vulcanized composition is also much more robust against the above-mentioned environmental conditions than vulcanized natural rubber without a filler or with a filler being not lignin.

In order to complete manufacturing of the sports floor component, additional steps may be executed depending on the type of the component. For example, if the sports floor component to be manufactured is artificial turf infill, the vulcanized composition is granulated. For example, the solid vulcanized mixt composition ure may be cut, shredded or ground to provide the artificial turf infill. The artificial turf infill may be then used to manufacture an artificial turf as it is illustrated in figure 3.

In other embodiments, the vulcanized rubber composition is granulated and mixed with a binder, e.g., a PU-based binder, to form a shock-pad, an elastic support layer, a running track layer, a playground layer, or other type of sports-floor component.

In still other embodiments, the vulcanization process may be performed within a form having a predefined shape, or the already vulcanized composition may be cut or otherwise processed to adapt the predefined shape, and the vulcanized composition having the desired shape may then directly be used as the sports floor component, e.g., a support mat or shock pad, or may be combined with (e.g., glued to) other materials or layers of materials to form the sports floor.

The granulate and its surface typically consists of both filler components and cross-linked NR (or ENR). The uniform distribution of the filler within the matrix formed by the cross-linked NR (or ENR) ensures an approximately homogeneous distribution of the filler in the granulate and on the surface.

The method may optionally include manufacturing and/or installing a sports floor comprising the sports floor component, wherein the method involves combining the vulcanized sports floor component with other components to create the sports floor. For instance, the vulcanized sports floor component can be used as infill, which is added to an already installed artificial turf system, thereby forming an artificial turf 300 as illustrated in Figure 3. The rubber-filler-based infill can also be mixed and/or combined with other types of infill, such as sand or plant-based infill materials, including olive pit particles, cork, hemp, or similar materials.

In a further optional step, the surface of the vulcanized composition receives a surface treatment with a waxy coating. A wax is applied as a protective barrier to improve UV and ozone resistance. The waxy layer can be sprayed, brushed, or automatically formed if wax was included in the composition.

Figure 2 illustrates a sports floor component in the form of infill 200. Artificial turf infill is a granular material used to fill the space between the fibers of artificial turf systems, providing support, cushioning, and stability. Infill enhances the performance and safety of the turf by improving shock absorption, reducing wear, and mimicking the feel of natural grass. Common applications include sports fields, playgrounds, and landscaping.

Figure 3 illustrates artificial turf 300 comprising the infill 200 shown in figure 2. The infill 200 may be the only infill of the turf. In other embodiments, it is combined with one or more other infill types such as plant-based infill material made e.g. from wood, cork, olive pits, hemp, sisal, or zeolite-based infill, or sand. The combination of two or more infill materials may be a mixture of infill granules of different types, or may have a layered structure. For example, sand can be used as a stabilizing layer and the natural-rubber-filler based infill could be used as performance infill layer placed on top of the stabilizing layer.

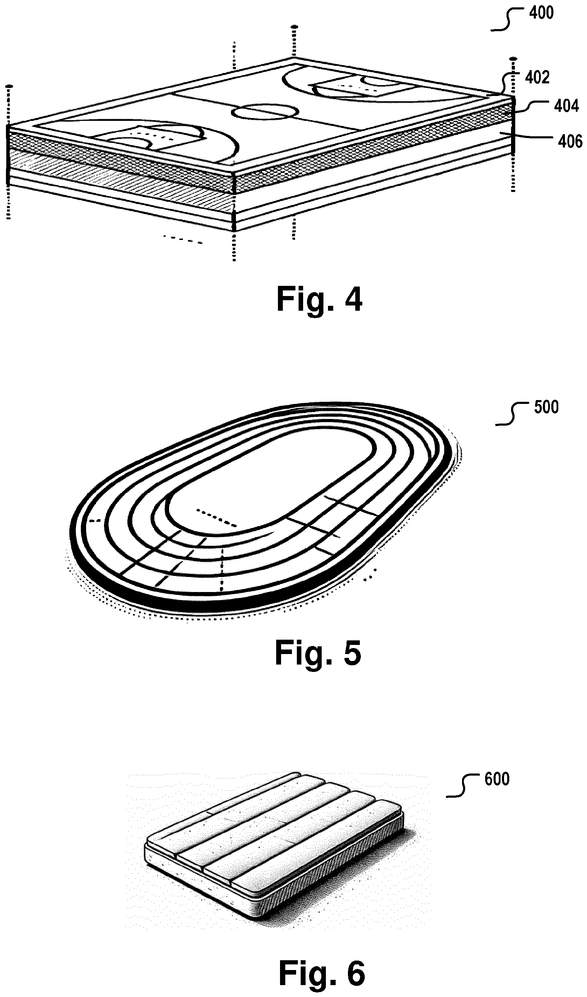

Figure 4 illustrates a sports floor component configured as a support layer 406 within a sports floor system 400. The sports floor system 400 can be, for example, a soccer or handball field. The system 400 may comprise multiple layers:

The playing surface layer 402 provides the primary interface for athletes, ensuring grip, comfort, and durability. Depending on the required performance characteristics, such as shock absorption, ball bounce, and wear resistance, the materials of the playing surface layer may be, for example, polyurethane or acrylic coating (e.g. for indoor courts sch as basketball or badminton), synthetic Turf or Rubber for landscaping, playgrounds or multi-sport surfaces.

The support Layer 404 may have the function of a shock absorption layer. It absorbs and distributes impacts, reduces stress on athletes' joints and muscles, and enhances the lifespan of the top layer.

The support layer 404 and/or the playing surface layer 402 may be made of an irreversibly covalently cross-linked NR (or ENR) matrix comprising a filler.

The support layer 404 is not visible, so the color of the filler is irrelevant. Hence, for the support layer 404, bright fillers (e.g. chalk or kaolin) and dark fillers (e.g. lignin) may be used. However, for the visible playing surface layer 402, a bright infill is typically preferred to ensure that the color of the filler does not alter or darken the intended color of the sports floor. For example, one of the following fillers having a white or bright color may be chosen for sports floor components required to have a bright or at least not dark color: Calcium Carbonate (Chalk), Zinc Oxide, Aluminum Hydroxide, Magnesium Hydroxide, Silica (Fumed or Precipitated), Talc, Gypsum (Calcium Sulfate), Wollastonite, Calcium Silicate, Barium Sulfate, Kaolin (White Clay).

The base layer 406, also referred to as foundation, ensures a level, firm surface to support the upper layers. It is commonly made of concrete or asphalt for outdoor applications, or engineered plywood or particleboard for indoor sports floorings.

Figure 5 illustrates a sports floor in the form of a running track 500. The topmost layer, the running surface layer, and/or a support layer below this topmost layer, may be made of an irreversibly covalently cross-linked NR (or ENR) matrix comprising a filler. As mentioned with respect to figure 4, for layers of the running track which are not visible, the color of the filler is irrelevant. Hence, for the support layer of the running track, bright fillers (e.g. chalk or kaolin) and dark fillers (e.g. lignin) may be used. However, for the visible surface layer of the running track, a bright infill is typically preferred to ensure that the color of the filler does not alter or darken the intended color of the running track.

Figure 6 illustrates a sports floor in the form of a shock pad 600. A shock pad as used herein is a cushioning layer or cushioning tile installed beneath the surface material (e.g., artificial turf, rubber tiles, or synthetic flooring) or used as the topmost surface layer. In the latter case, a shock pad is often also referred to as impact protection layer and used e.g. for playgrounds. Its primary function is to absorb impact, enhance safety by reducing the risk of injuries from falls, and improve surface performance by providing shock absorption, energy return, and uniform support. A shock pad may be made completely or partially from the irreversibly covalently cross-linked NR (or ENR) further comprising the filler. The filler can be, for example, an inorganic filler, a synthetic or recycled filler, and in particular a plant-based filler like lignin. Optionally, it may comprise additional materials like foam, cork, or composites and are designed to meet specific safety and performance standards for sports applications, including recreational applications. The additional materials may be co-extruded or glued or otherwise attached to the irreversibly covalently cross-linked n NR (or ENR).

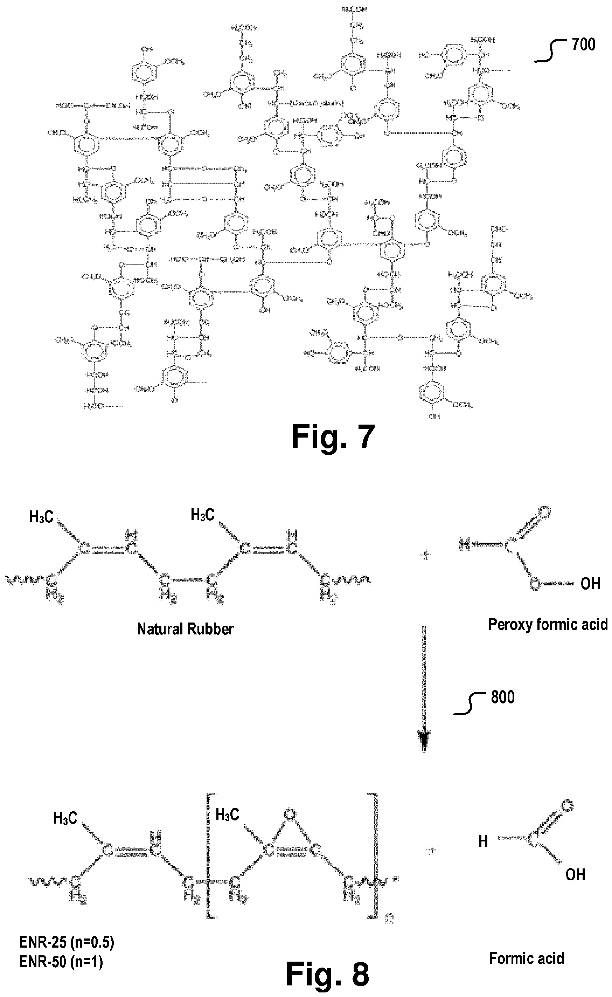

Figure 7 illustrates the structure of lignin from a softwood. As can be inferred from the figure, Lignin is a complex, amorphous biopolymer composed of phenylpropanoid units, linked by various chemical bonds, including ether (C-O-C) and carbon-carbon (C-C) linkages. Its irregular, highly branched structure contains abundant aromatic rings and hydroxyl groups, which contribute to its rigidity and thermal stability. Additionally, lignin's complex, high-molecular-weight structure improves thermal stability and its inherent antioxidant properties protect the NR (or ENR) from oxidative degradation.

Figure 8 illustrates the epoxidation reaction of natural rubber. All examples described herein may be made with epoxidized natural rubber (ENR) instead of natural rubber.

The epoxidation reaction of natural rubber involves introducing an oxygen atom to the double bonds of natural rubber (cis-1,4-polyisoprene).

This chemical reaction produces an oxirane or epoxide compound that consists of a three-membered ether in a cyclic form. For example, ENR 25 (25 mole% epoxide) and/or ENR 50 (50 mole% epoxide), which are commercially available, can be used as the epoxidized natural rubber before it is further processed (e.g., mixed with other substances and vulcanized).

As illustrated in figure 8, an organic peracid (e.g., peroxy formic acid or peracetic acid) is mixed with natural rubber. Peracids react with the double bonds in the polyisoprene chain, forming three-membered epoxide rings at the site of the double bond. This induces a replacement of double bonds in the polyisoprene chains by epoxide groups. Acidic or basic catalysts (e.g., sulfuric acid or ion-exchange resins) is preferably used to control the reaction.

Epoxidized natural rubber may provide the advantage of increased resistance of the resulting natural rubber-based sports floor component against many kinds of chemicals (oils, oxidants, free radicals, ozone) both because of chemical and physical aspects: the epoxidized natural rubber has an increased chemical resistance to said substances. In addition, epoxidized rubber exhibits lower permeability to gases, thereby preventing the contact with ozone, free radicals and other gaseous substances which might react with the rubber molecules and induce a decay of the rubber material.

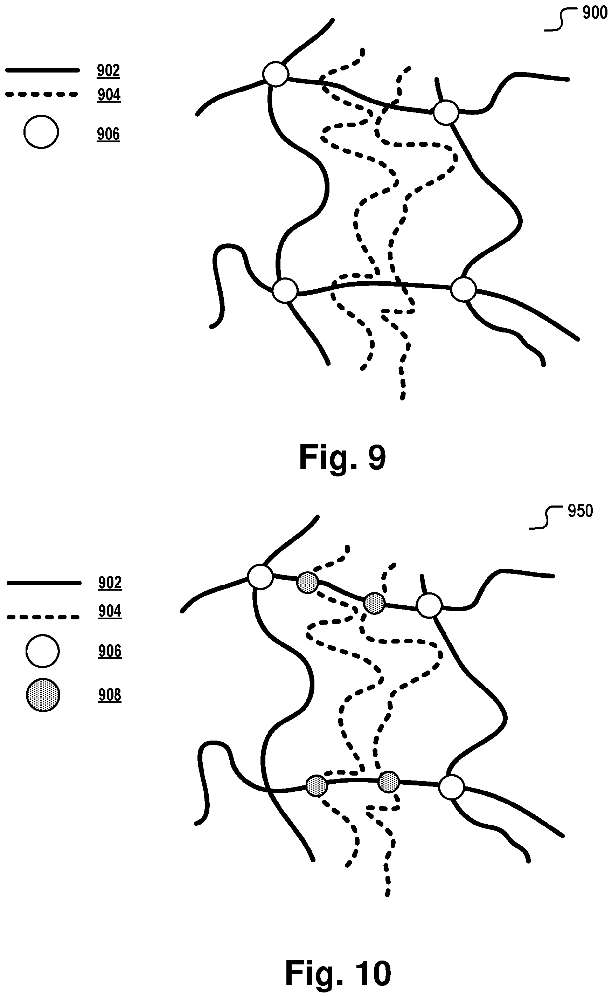

Figure 9 illustrates a matrix 900 of covalently cross-linked NR (or ENR) molecules 902. Figure 9 also shows a filler molecule 904. The lines 902 may represent the polyisoprene Backbone of NR (or ENR), which is primarily made of cis-1,4-polyisoprene, a long-chain polymer with repeating isoprene units (C5H8C_5H_8C5H8). In a vulcanization process, sulfur atoms form covalent bonds between the double bonds of neighboring polyisoprene chains. The sulfur atoms may create monosulfide (S), disulfide (S-S), or polysulfide (S-S-S-...-S) cross-links, depending on the curing conditions and sulfur and accelerator concentrations. These sulfur-based cross-links are covalent and irreversible and are illustrated in figure 9 as white dots. The result of the vulcanization is the three-dimensional matrix depicted in figure 9, where polyisoprene chains 902 are interconnected, forming a highly elastic network.

-Figure 10 illustrates a matrix 950 of covalently cross-linked NR (or ENR) molecules 902 which are in addition cross-linked with the filler molecules 904. Whether additional cross-links between the NR (or ENR) molecules and the filler molecules 904 will form may depend on the type of filler used and on the vulcanization conditions. If lignin is used as a filler, this may allow some cross-links also to form between the NR (or ENR) and the lignin, thereby further increasing the robustness of the resulting cross-linked material against heat, UV-light and other stressors. However, for some types of fillers, in particular many inorganic fillers, no additional cross-links between the NR (or ENR) molecules and the filler molecules will form. Hence, the figures 9 and 10 merely serve to illustrate that the cross-linking reaction will create additional cross-links at least between the NR (or ENR) polymer chains, and optionally also to the filler molecules (in particular when lignin or silica is used as filler or parts of the filler).

According to some embodiments, e.g. the embodiment depicted in figure 10, the vulcanization parameters are chosen such that a particularly high cross-link density is reached. This results in greater robustness against degradation, and in increased rigidity. In these embodiments, there may also be many covalent bonds 908 between the NR (or ENR) molecules 902 and the filler molecules 904. The NR (or ENR) matrix depicted in figure 10 comprises several covalent cross-links 908 between NR (or ENR) molecules and filler molecules in addition to the covalent cross-links 906 between NR (or ENR) molecules.

During vulcanization, covalent bonds may also be formed between reactive OH groups in lignin and reactive groups of the NR (or ENR). Specifically, the reactive OH groups in the lignin can be a phenolic hydroxyl group or aliphatic hydroxyl groups. The presence of these linkages 908 leads to improved interfacial adhesion, which reinforces the rubber matrix.

Rubbers have an optimum range of cross link density for their practical usage. The cross link level has to be high enough to prevent fracture due to viscous flow but low enough to avoid brittleness. The degree and type of cross links depends on the type and amount of the vulcanization agent (e.g. sulfur), the type and amount of the accelerator, the ratio of the vulcanization agent and the accelerator, and the cure time. Generally, a high accelerator / sulfur ratio and a long cure time increase the number of monosulfide cross links at the expense of polysulfide cross links. Such vulcanizates exhibit better heat stability, lower compression set, and longer reversion time as compared to polysulfide predominant network due to better stability of C-S bonds as compared to S-S bonds.

For example, to obtain a matrix with a high cross-link density and numerous covalent and irreversible bonds to the lignin molecules, a sulfur content of approximately 2%-3% by weight or higher may be utilized. Additionally, prolonged curing times of about 20-60 minutes and/or elevated curing temperatures ranging from 150°C to 180°C can be selected:

Activators such as zinc oxide and stearic acid may optionally be included to further enhance the cross-linking efficiency. This approach is particularly advantageous for sports floor components subjected to high impact stress and wear, such as infill materials, shock pads, components of running tracks or tennis courts, and support layers for high-activity sports applications.

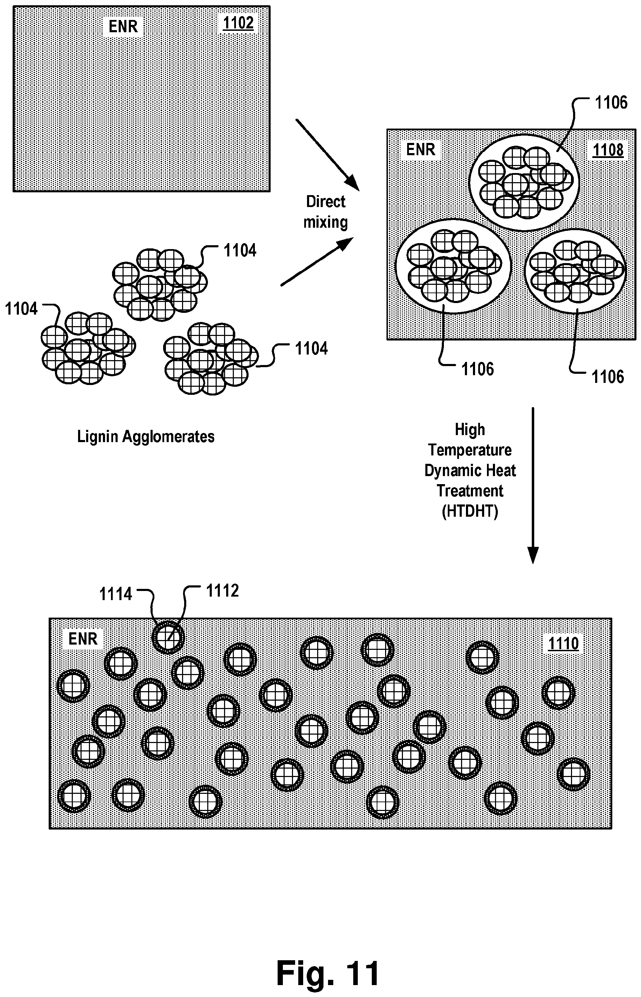

Figure 11 illustrates a high temperature dynamic heat treatment (HTDHT) procedure applied on an ENR-lignin composition.

Lignin is a macromolecule with a strong tendency to form lignin-agglomerates 1104. Hence, lignin-agglomerates may be comprised in the kraft lignin and/or other types of lignin used as the filler. When lignin-agglomerates are mixed with NR (or ENR), and in particular when they are mixed with ENR, a mixture 1108 of ENR (or NR) and lignin and optionally one or more further additives is formed. In this mixture 1108, the contact interface between the lignin agglomerates 1104 and the ENR mass is small, because the agglomerates are comprised in cavities 1106. However, the small amount of contact interface area is a strong obstacle for the formation of covalent or non-covalent, reversible or irreversible cross-linking bonds between the lignin and the ENR or NR matrix. However, these cross-links are important for the ability of lignin to protect the NR or ENR from sunlight, oxidants, ozone, radicals and other harmful factors, as these cross-links stabilize the overall structures of the NR or NER elastomeric matrix.

The inventors have observed that subjecting the mixture 1108 to a High-Temperature Dynamic Heat Treatment (HTDHT) lignin can be efficiently dispersed into the ENR (or NR) matrix. Thereby, the lignin agglomerates are dissolved into smaller agglomerates or individual molecules, and the contact surface between the lignin and the NR or ENR is strongly increased. This is illustrated in figure 11 in the mixture 1110 which is obtained by subjecting the mixture 1106 to the HTDHT treatment: the individual lignin molecules or small lignin agglomerates 1112 are homogeneously dispersed in the NR/ENR matrix, whereby the contact interface 1114 between lignin and rubber is greatly increased and the volume of the cavities is greatly reduced. As a result, the number of cross-links between the lignin and the rubber, which can be generated in the vulcanization reaction, may be significantly increased.

Applying the HTDHT on the composition 1108 of rubber and ENR (or NR) may comprise heating the composition to a temperature of 150°C to 200°C while the composition is constantly mixed. The mixing is preferably performed using high-shear mixing equipment, such as a Banbury mixer, two-roll mill, or an internal mixer. The high mechanical shear ensures uniform dispersion of lignin in the rubber matrix. Optionally, moderate pressure is applied, to enhance mixing efficiency. The mixing time is preferably in the range of 5 to 15 minutes, depending on the material viscosity and desired dispersion level. Prolonged mixing may improve the dispersion, but can lead to overheating or degradation.

According to one example, a mixing speed in a Banbury mixer of 50-100 rpm or higher is applied. Higher speeds improve dispersion but may require cooling to prevent excessive heat buildup.

According to preferred embodiments, the lignin is pre-processed to reduce the size of the agglomerates. For example, the lignin may be ground into fine powder, chemically modified, and/or mixed with a plasticizer, in particular oil, to enhance compatibility with the rubber matrix.

The HTDHT treatment was observed to promote dispersion of lignin in the rubber matrix and to increase the interfacial surface between lignin and rubber, thereby improving mechanical properties and thermal stability of the resulting product.

According to one example, the mixture 1110, after the HTDHT treatment is completed, is provided as the composition generated in step 102 of the method illustrated in figure 1. The composition 1110 may be mixed with further additives and with a vulcanization agent in step 104 to induce the vulcanization reaction of step 106.

The term "vulcanization" as used herein is a chemical process that induces the formation of covalent cross-links in rubber by heating it with a vulcanization agent, e.g., sulphur. Hence, vulcanization is a form of curing that involves the creation of irreversible covalent cross-links. The vulcanization is typically performed under pressure. A "vulcanization agent" is a curing agent used in the vulcanization of rubbers.

A "natural rubber" as used herein refers to a polymer derived from the latex of rubber trees, e.g., Hevea brasiliensis, composed mainly of cis-1,4-polyisoprene. The natural rubber may be a functionalized or non-functionalized form of natural rubber. For example, the natural rubber can be raw natural rubber, or hydrogenated or functionalized natural rubber. If the natural rubber is epoxidized, it is referred to as ENR.

A "cross-link" as used herein is a chemical bond or physical connection that joins two or more polymer chains together, forming a three-dimensional network. Cross-links can be covalent (e.g., sulfur bonds in vulcanized rubber) or non-covalent (e.g., ionic or hydrogen bonds). Cross-links may enhance the material's mechanical properties, such as elasticity, tensile strength, and resistance to deformation, while also improving durability and thermal stability.

A "sports floor" as used herein refers to a surface designed to support athletic and recreational activities, in particular by providing durability, safety, and performance in accordance with the requirements of the respective application. It includes a range of systems such as artificial turf, rubber tiles, hardwood courts, and synthetic surfaces used in sports fields, indoor courts, and playgrounds. In the context of playgrounds, sports flooring also prioritizes impact absorption and safety to minimize injuries from falls while maintaining durability and weather resistance for outdoor environments.

While the invention has been illustrated and described in detail in the drawings and foregoing description, such illustration and description are to be considered illustrative or exemplary and not restrictive; the invention is not limited to the disclosed examples.

Disclosed herein are methods for manufacturing a sports floor component and respective sports floor components which may be described with reference to clauses presented below.
1. A sports floor component (200, 402, 404) comprising covalently cross-linked rubber, and further comprising a filler (700, 904, 1104, 1112), wherein the rubber is natural rubber or epoxidized natural rubber (1102).
2. The sports floor component of clause 1, wherein the covalently cross-linked rubber is irreversibly cross-linked.
3. The sports floor component of any one of the previous clauses, wherein the covalently cross-linked rubber forms an elastomeric matrix filled with the filler.
4. The sports floor component of any one of the previous clauses, wherein the sports floor component is at least one of:
   - an artificial turf infill;
   - a component of a running track;
   - a component of a tennis court;
   - a support mat; and
   - a shock pad; and
   - a combination of two or more of the aforementioned components.
5. The sports floor component of any one of the previous clauses, wherein the filler is or comprises:
   - an inorganic filler, in particular an inorganic filler selected from a group comprising: Chalk; Silica (Quartz Sand); Calcium Silicate; Barium Sulfate; Clay or Kaolin; Aluminum Hydroxide; Magnesium Hydroxide; Zinc Oxide; Fly Ash; Talc; Wollastonite; Perlite; or
   - a recycled, plastic-based filler, or
   - an organic filler, in particular Carbon Black or lignin; or
   - a combination of two or more of the foregoing.
6. The sports floor component of any one of the previous clauses, wherein the filler is lignin or silica.
7. The sports floor component of any one clause 6, wherein the filler is lignin and the lignin is Kraft Lignin.
8. The sports floor component of any one of the previous clauses, wherein the rubber is epoxidized natural rubber.
9. The sports floor component of any one of the previous clauses, wherein the covalently cross-linked natural rubber is vulcanized natural rubber.
10. The sports floor component of any one of the previous clauses, wherein the covalently cross-linked rubber is urethane-cross-linked natural rubber.
11. The sports floor component of any one of the previous clauses, wherein the covalently cross-linked rubber is a covalently cross-linked blend of natural rubber and a saturated elastomer, wherein the saturated elastomer is in particular EPDM.
12. The sports floor component of any one of the previous clauses, wherein the sports floor component is coated with a waxy barrier layer.
13. The sports floor component of any one of the previous clauses, further comprising one or more additives selected from the group consisting of:
   - a plasticizer, in particular bio-based oil,
   - a UV-protectant,
   - a thermal stabilizer,
   - an antioxidant, and
   - an anti-ozone agent.
14. The sports floor component of clause 13,
   - the antioxidant being an amine antioxidant, in particular para-phenylenediamine; or
   - the antioxidant being a phenolic antioxidant.
15. A method of manufacturing a sports floor component (200, 404), comprising:
   - mixing (102) rubber and a filler (700, 904, 1104, 1112) to provide a rubber composition, wherein the rubber is natural rubber or epoxidized natural rubber;
   - covalently cross-linking (104) the rubber in the rubber composition to form a matrix of covalent bonds incorporating the filler.
16. The method of clause 15, further comprising:
   - adding one or more additives selected from the group consisting of UV-protectants, antioxidants, and anti-ozone agents to the composition prior to the creation of the covalent cross-links; and/or
   - adding a vulcanization agent to facilitate the formation of cross-links between polyisoprene chains in the rubber; and/or
   - adding an accelerator of a vulcanization reaction, wherein in particular the vulcanization accelerator is selected from the group comprising of thiazoles, sulfenamides, thiurams, and dithiocarbamates.
17. The method according to any one of clauses 15-16, wherein the covalently cross-linking is a vulcanization, the vulcanization including heating the rubber to a temperature range of about 140°C to 200°C to initiate cross-linking reactions.
18. The method according to any one of clauses 15-17, wherein the filler is lignin and wherein the mixing (102) of the rubber and lignin (700, 904, 1104, 1112) to provide the rubber composition comprises:
   - mixing the rubber (1102) and lignin-agglomerates (1104) to form an initial mixture (1108);
   - subjecting the initial mixture to a high temperature dynamic heat treatment involving mixing the initial mixture for at least 5 minutes at a temperature of 150°C to 200°C to provide a further mixture (1110) with increased dispersion of the lignin (1114) in the rubber (1110); and
   - using the further mixture as the rubber composition to be mixed with the further additives, the vulcanization agent and/or the accelerator of vulcanization.
19. The method according to any one of clauses 15-18,
   - wherein the vulcanization agent is sulfur,
   - wherein the vulcanization agent is added in amounts ranging from 0.4 to < 2.0 parts per 100 weight parts of the rubber, phr, in particular 0.4 to 0.8 phr; and/or
   - wherein the vulcanization agent and the accelerator are added in a weight ratio of the accelerator: vulcanization agent of less than 12.0:1.0, in particular 2.5:1.0 to 12.0:1.0.
20. The method according to any one of clauses 15-19, wherein the filler is lignin and/or silica, the method further comprising:
   - silanising the filler using a silane coupling agent under the presence of the rubber, thereby covalently coupling the silanized filler to the rubber.

### REFERENCE SIGNS LIST

- 102-104: steps
- 200: artificial turf infill
- 300: artificial turf
- 400: sports flooring system
- 402: surface layer
- 404: support layer
- 406: base layer
- 500: running track
- 600: shock pad
- 700: lignin
- 800: epoxidation reaction
- 900: matrix of covalently cross-linked NR (or ENR) molecules
- 902: NR (or ENR) molecule
- 904: filler molecule
- 906: covalent bond between NR (or ENR) molecules
- 908: covalent bond between a NR (or ENR) molecule and a lignin molecule
- 950: matrix of covalently cross-linked NR (or ENR) molecules linked also to lignin
- 1102: ENR
- 1104: lignin agglomerates
- 1106: cavities
- 1108: ENR-lignin composition obtained from direct mixing
- 1110: ENR-lignin composition resulting from HTDHT
- 1112: lignin molecule
- 1114: contact interface lignin-molecule-ENR

## Claims

1. A sports floor component (200, 402, 404) comprising covalently cross-linked rubber, and further comprising a filler (700, 904, 1104, 1112), wherein the rubber is natural rubber or epoxidized natural rubber (1102).

2. The sports floor component of claim 1, wherein the covalently cross-linked rubber is irreversibly cross-linked.

3. The sports floor component of any one of the previous claims, wherein the covalently cross-linked rubber forms an elastomeric matrix filled with the filler.

4. The sports floor component of any one of the previous claims, wherein the sports floor component is at least one of:
- an artificial turf infill;
- a component of a running track;
- a component of a tennis court;
- a support mat; and
- a shock pad; and
- a combination of two or more of the aforementioned components.

5. The sports floor component of any one of the previous claims, wherein the filler is or comprises:
- an inorganic filler, in particular an inorganic filler selected from a group comprising: Chalk; Silica (Quartz Sand); Calcium Silicate; Barium Sulfate; Clay or Kaolin; Aluminum Hydroxide; Magnesium Hydroxide; Zinc Oxide; Fly Ash; Talc; Wollastonite; Perlite; or
- a recycled, plastic-based filler, or
- an organic filler, in particular Carbon Black or lignin; or
- a combination of two or more of the foregoing.

6. The sports floor component of any one of the previous claims, wherein the filler is lignin, in particularKraft Lignin, and/or wherein the rubber is epoxidized natural rubber.

7. The sports floor component of any one of the previous claims, wherein the covalently cross-linked natural rubber is vulcanized natural rubber or vulcanized epoxidized natural rubber.

8. The sports floor component of any one of the previous claims, wherein the covalently cross-linked rubber is urethane-cross-linked natural rubber.

9. The sports floor component of any one of the previous claims, wherein the covalently cross-linked rubber is a covalently cross-linked blend of natural rubber and a saturated elastomer, wherein the saturated elastomer is in particular EPDM.

10. The sports floor component of any one of the previous claims, wherein the sports floor component is coated with a waxy barrier layer; and/or wherein the sports floor component further comprisesone or more additives selected from the group consisting of:
- a plasticizer, in particular bio-based oil,
- a UV-protectant,
- a thermal stabilizer,
- an antioxidant, and
- an anti-ozone agent.

11. A method of manufacturing a sports floor component (200, 404), comprising:
- mixing (102) rubber and a filler (700, 904, 1104, 1112) to provide a rubber composition, wherein the rubber is natural rubber or epoxidized natural rubber;
- covalently cross-linking (104) the rubber in the rubber composition to form a matrix of covalent bonds incorporating the filler.

12. The method according to claim 11, wherein the filler is lignin and/or silica, the method further comprising:
- silanising the filler using a silane coupling agent under the presence of the rubber, thereby covalently coupling the silanized filler to the rubber.

13. The method according to claim 11 or 12, wherein the covalently cross-linking of the rubber is a vulcanization, the vulcanization including heating the rubber to a temperature range of about 140°C to 200°C to initiate cross-linking reactions.

14. The method according to any one of claims 11-13, wherein the filler is lignin and wherein the mixing (102) of the rubber and lignin (700, 904, 1104, 1112) to provide the rubber composition comprises:
- mixing the rubber (1102) and lignin-agglomerates (1104) to form an initial mixture (1108);
- subjecting the initial mixture to a high temperature dynamic heat treatment involving mixing the initial mixture for at least 5 minutes at a temperature of 150°C to 200°C to provide a further mixture (1110) with increased dispersion of the lignin (1114) in the rubber (1110); and
- using the further mixture as the rubber composition to be mixed with the further additives, the vulcanization agent and/or the accelerator of vulcanization.

15. The method according to any one of claims 11-14,
- wherein the vulcanization agent is sulfur,
- wherein the vulcanization agent is added in amounts ranging from 0.4 to < 2.0 parts per 100 weight parts of the rubber, phr, in particular 0.4 to 0.8 phr; and/or
- wherein the vulcanization agent and the accelerator are added in a weight ratio of the accelerator: vulcanization agent of less than 12.0:1.0, in particular 2.5:1.0 to 12.0:1.0.
